# EUROPEAN PATENT APPLICATION

(11) **EP 4 520 177 A1**
(43) Date of publication of application: **12.03.2025**
(21) Application number: 23382918.3
(22) Date of filing: 08.09.2023
(51) Int. Cl.: A22C 11/00, B65B 35/24

(54) **AUTOMATIC MACHINE AND METHOD FOR FORMING AND TRANSFERRING BATCHES OF SAUSAGES**

(71) Applicant: Metalquimia, S.A.U., 17007 Girona (ES)
(72) Inventor: LAGARES GAMERO, Josep, 17850 Besalú (ES)
(74) Representative: Torner, Juncosa I Associats, SL

(57) **Abstract**

It is disclosed an automatic machine for forming and transferring batches of sausages comprising: a first conveyor belt for advancing a plurality of sausages in parallel arrangement, adjacent to each other; a second conveyor belt being configured to receive the plurality of sausages from the first conveyor belt and to advance the plurality of sausages; a third conveyor belt arranged above the second conveyor belt, said third conveyor belt comprising a plurality of spaced apart paddles configured for creating batches of sausages from the sausages on the second conveyor belt; wherein the second conveyor belt is a retractable conveyor belt; and wherein the spaced apart paddles are configured to act as a stop of the batches of sausages while the second conveyor belt retracts, so that the batches of sausages fall into an inferior level.

It is also disclosed a method for forming and transferring batches of sausages.

## Description

### Technical field

The present invention is directed to an automatic machine for forming and transferring batches of sausages. The transfer of batches will be made in general but not limited to into a packaging machine

The present invention also discloses a method for forming and transferring batches of sausages.

### Background of the Invention

In the meat industry and, in particular, in the sausage manufacturing industry, is necessary to group and transfer sausages from one place to the other. The present invention aims to provide an automatic machine for forming and transferring batches of sausages and a method for forming and transferring batches of sausages.

US 9554581 B2 discloses a sausage collation device for collating sausages to form sausage groups having a predetermined number of sausages, comprising a transport device for transporting said sausages spaced apart from each other; at least two accumulator elements for collating said sausages, where said at least two accumulator elements for collating are movable in a direction of transport T of said transport device, and a control device including instructions for inserting a first accumulator element downstream a last sausage of said first sausage group, and pushing said first sausage group together between said first accumulator element and said second accumulator element.

US 2011/0124276 A1 discloses a device for loading link sausages into a tray package comprising a first continuous conveyor adapted and constructed to transport sausage links, a transfer belt adapted and constructed to transfer sausages from the first continuous conveyor, a separation and placement device adapted and constructed to receive sausages from transfer belt, separate the sausages from transfer belt, separate the sausages from transfer belt into discrete groups of plurality of sausages, and place the discrete groups onto a tray package, and a second contiguous conveyor adapted and constructed to transport loaded trays of sausage links away from the separation and placement device.

It is also known in the art automatic machines that employ robotic arms to from groups of sausages and to transfer them to subsequent stations of their manufacturing process. However, such kind of robots are expensive and impose additional tasks to train and maintain.

### Description of the Invention

The present invention aims to provide a relatively simple and efficient automatic machine for forming and transferring batches of sausages that is also easy to maintain.

According to a first aspect, the present invention concerns to an automatic machine for forming and transferring batches of sausages, as defined in claim 1, and comprises:
- a first conveyor belt for advancing a plurality of sausages in parallel arrangement, adjacent to each other, in a first advance direction at a first advance speed;
- a second conveyor belt arranged substantially contiguous to the first conveyor belt and being configured to receive the plurality of sausages from the first conveyor belt and to advance the plurality of sausages in a second advance direction and at a second advance speed;
- a third conveyor belt arranged above the second conveyor belt and advancing in a third advance direction at a third advance speed, said third advance direction being parallel to the second advance direction, said third conveyor belt comprising a plurality of spaced apart paddles configured for creating batches of sausages from the plurality of sausages arranged on the second conveyor belt;
wherein the second conveyor belt is a retractable conveyor belt and is configured to retract towards a retracting direction being opposite to the second advance direction; and wherein the spaced apart paddles of the third conveyor belt are configured to act as a stop of the batches of sausages in the retracting direction while the second conveyor belt retracts, so that the batches of sausages fall into an inferior level.

Preferably, the batches of sausages fall into said inferior level to be collected, although they can also be subject to other operations.

According to the present invention, the automatic machine may further comprise a sausage loading unit, which comprises: a carriage movable along the first conveyor belt; a sausage discharge unit for placing sausages on the first conveyor belt; a sausage feeding conveyor belt for feeding sausages to the sausage discharge unit; wherein the carriage is configured to synchronize with the advance speed of the first conveyor belt so that the sausages are placed on the first conveyor belt in a substantially contiguous manner in parallel arrangement, adjacent to each other. Preferably, the first conveyor belt comprises a plurality of contiguous individual compartments, each individual compartment being configured to receive a corresponding sausage; and the sausage loading unit may be configured to move the carriage along the first conveyor belt so that consecutive sausages are placed in contiguous individual compartments.

According to the present invention, the sausage feeding conveyor belt may be a V-shaped conveyor belt. However, other types of conveyor belts are also possible.

According to the present invention, the sausage feeding conveyor belt may be substantially perpendicular to the first conveyor belt, at least in a resting or non-operating position, as the position of the carriage, and thus, of the sausage feeding conveyor belt may vary during operation.

According to the present invention, the sausage discharge unit may comprise a discharge ramp adjacent to the sausage feeding conveyor belt.

According to the present invention, the automatic machine may further comprise an automatic packaging unit arranged for collecting and packaging the batches of sausages at the inferior level. Preferably, the packaging unit is configured to place a plurality of trays in an aligned configuration underneath the second conveyor belt; said second conveyor belt and said third conveyor belt being configured so that a corresponding plurality of batches of sausages is arranged above the corresponding tray aligned with it, so that when the second conveyor belt retracts each batch of sausages falls into the corresponding tray.

According to the present invention, the automatic machine may further comprise an aligning unit for aligning the plurality of sausages in parallel arrangement, on the first conveyor belt. Preferably, the aligning unit comprises an oscillating inclined plane arranged in a convergent manner for aligning the plurality of sausages in parallel arrangement, on the first conveyor belt.

According to the present invention, the paddles of the third conveyor belt are arranged perpendicular to it and to the third advance direction.

According to the present invention, the first advance direction and the second advance direction may be equal.

According to the present invention, the second advance direction and the third advance direction may be equal.

According to the present invention, the automatic machine may further comprise a transfer unit for transferring the sausages from the first conveyor belt to the second conveyor belt. Preferably, the transfer unit comprises a transfer element arranged substantially contiguous to the first and to the second conveyor belt. Preferably, the transfer unit further comprises a rotating shaft comprising a plurality of spaced apart paddles, said rotating shaft arranged substantially perpendicular to the first and second conveyor belt.

According to a second aspect of the present invention, it is disclosed a method for forming and transferring batches of sausages comprising the steps of:
- providing an automatic machine for forming and transferring batches of sausages according to the first aspect of the present invention;
- placing a plurality of sausages in parallel arrangement, adjacent to each other on a first conveyor belt;
- advancing the plurality of sausages in a first advance direction at a first advance speed with the first conveyor belt;
- receiving in a second conveyor belt the sausages of the first conveyor belt keeping their parallel arrangement;
- advancing the plurality of sausages on the second conveyor belt in a second advance direction at a second advance speed;
- creating batches of sausages from the plurality of sausages on the second conveyor belt with spaced apart paddles of a third conveyor belt arranged above the second conveyor belt advancing in a third advance direction at a third advance speed;
- retracting the second conveyor belt towards a retracting direction, said retracting direction being opposite to the second advance direction; and
- letting the batches of sausages fall into an inferior level.

According to the present invention, the method may further comprise the step of collecting the batches of sausages from the inferior level.

According to the present invention, the method may further comprise the steps of: stopping the advance movement of the first, second and third conveyors belts before the second conveyor belt is retracted; returning the retracted second conveyor belt to its extended position; and resuming the advance movement of the first, second and third conveyor belts.

According to the present invention, the step of placing a plurality of sausages on a first conveyor belt may comprise the steps of: providing a sausage to a sausage feeding conveyor belt; driving the sausage to a sausage discharge unit by the sausage feeding conveyor belt; synchronizing the advance speed of a carriage supporting the discharge unit with the first advance speed of the first conveyor belt; and discharging the sausage in a substantially contiguous manner to a preceding sausage.

According to the present invention, the first conveyor belt may comprise a plurality of contiguous individual compartments, and the step of placing a plurality of sausages on the first conveyor belt may comprise the steps of: synchronizing the carriage of the sausage loading unit with the advance movement of the individual compartment on which a sausage is to be placed; and placing the sausage in the corresponding individual compartment so that consecutive sausages are in contiguous individual compartments.

According to the present invention, the method may further comprise the step of returning the carriage to its initial position while the first conveyor belt is stopped.

According to the present invention, the method may further comprise the steps of: providing, by an automatic packaging unit, a plurality of trays in an aligned configuration underneath the second conveyor belt; arranging each batch of sausages above the corresponding tray; and letting each batch of sausages fall into the corresponding tray.

Preferably, the method further comprises the step of closing the trays having a plurality of sausages to form packages of a plurality of sausages.

According to the present invention, the method may further comprise the step of aligning the sausages in parallel arrangement, adjacent to each other on the first conveyor belt, with an aligning unit.

The advance direction of a conveyor belt should be understood as the line or course on which the surface of said conveyor belt in contact, or intended to be in contact, with the sausages is moving or is aimed to move.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

### Brief description of the Figures

The foregoing and other advantages and features will be more fully understood from the following detailed description of an embodiment with reference to the accompanying drawings, to be taken in an illustrative and non-limitative manner, in which:
FIG. 1 shows a perspective view of a first exemplary embodiment of an automatic machine for forming and transferring batches of sausages according to the present invention.
FIG. 2 shows a perspective view of a second exemplary embodiment of an automatic machine for forming and transferring batches of sausages according to the present invention.
FIG. 3 shows a detail perspective view of the second and third conveyor belts of the second exemplary embodiment of an automatic machine according to the present invention shown in FIG. 2.
FIG. 4 shows a detail perspective view of the transfer unit the second exemplary embodiment of an automatic machine according to the present invention shown in FIGS. 2 and 3.
FIG. 5 shows a side view of the transfer unit shown in FIG. 4.
FIG. 6 shows a perspective view of the second exemplary embodiment of an automatic machine according to the present invention shown in FIGS. 2 to 5.
FIG. 7 shows a detail perspective view of the sausage loading unit of the second exemplary embodiment of an automatic machine according to the present invention shown in FIGS. 2 to 6.
FIG. 8 shows a perspective view of a third exemplary embodiment of an automatic machine for forming and transferring batches of sausages according to the present invention.
FIG. 9 shows a perspective view of the second conveyor belt of the third exemplary embodiment of an automatic machine according to the present invention shown in FIG. 8 in an extended position.
FIG. 10 shows a perspective view of the second conveyor belt shown in FIG. 9 in an intermediate position.
FIG. 11 shows a perspective view of the second conveyor belt shown in FIGS. 9 and 10 in a retracted position.

### Detailed Description of the Invention and of particular embodiments

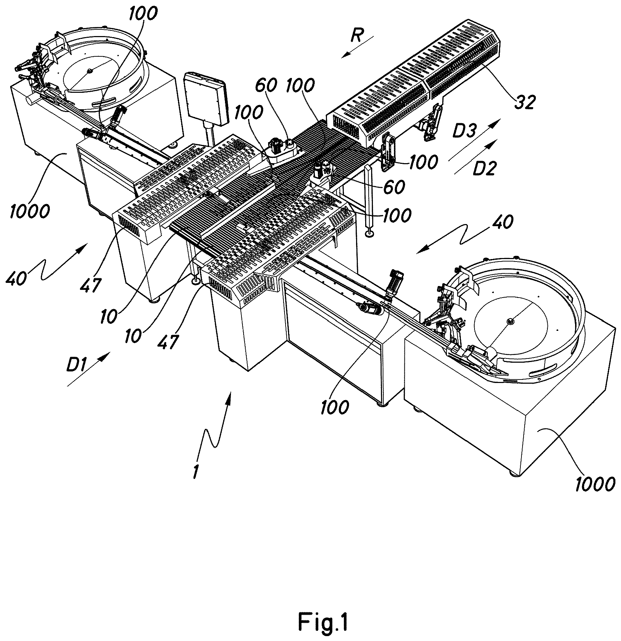

In FIG. 1 can be seen a perspective view of a first exemplary embodiment of an automatic machine 1 for forming and transferring batches of sausages according to the present invention.

The automatic machine 1 depicted comprises two production lines, although in other embodiments the automatic machine 1 can comprise a single production line. In the present case, although most of the elements of the machine are doubled, one of each production line, a second conveyor belt 20, see detailed description below, is shared by the two production lines. Unless otherwise explicitly provided, the following description is applicable to embodiments having a single or two production lines.

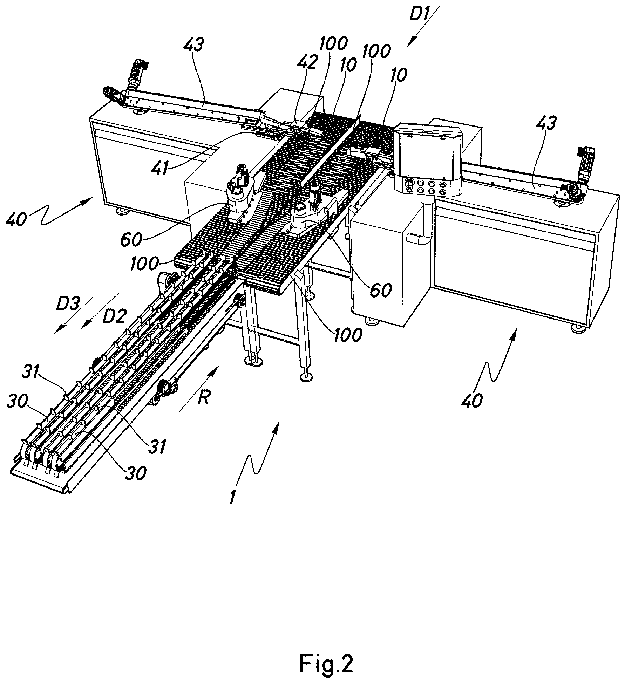

The automatic machine 1 of the depicted exemplary embodiment comprises two first conveyor belts 10 arranged adjacent to each other, one for each production line of this exemplary embodiment. Said conveyor belts 10 are configured to advance a plurality of sausages 100 in parallel arrangement, adjacent to each other, in a first advance direction D1 at a first advance speed. Hidden by the optional protective cover 32, the automatic machine 1 further comprises a second conveyor belt 20 and a third conveyor belt 30, which can be seen in greater detail in FIGS. 2 to 6. The second conveyor belt 20 is arranged substantially contiguous and at an end of the first conveyor belt 10 and is configured to receive the plurality of sausages 100 from the first conveyor belt and to advance the plurality of sausages 100 in a second advance direction D2 at a second advance speed. Said second conveyor belt 20 is a retractable conveyor belt and is configured to retract towards a retracting direction R opposite to the second advance direction D2. The third conveyor belt 30 is arranged above the second conveyor belt 20 and advances in a third advance direction D3 at a third advance speed, said third advance direction D3 being parallel to the second advance direction D2.

The automatic machine 1 of this first exemplary embodiment also comprises an optional sausage loading unit 40, for each production line, for loading sausages 100 to the corresponding first conveyor belt 10. In FIG. 1 the sausage loading units 40 have been depicted with its protective cover 47.

The first exemplary embodiment shown also comprises aligning units 60, one for each production line, configured to align the plurality of sausages in parallel arrangement on the first conveyor belt. Said aligning units 60 are optional and other embodiments of the automatic machine 1 of the present invention may lack them.

The automatic machine 1 of this first exemplary embodiment comprises two sausage feeders 1000, one for each production line of the machine 1. Said sausage feeders 1000 are optional and may not be present in other embodiments of an automatic machine 1 of the present invention. In this particular embodiment, the sausage feeders 1000 are of the centrifugal type.

FIG. 2 shows a perspective view of a second exemplary embodiment of an automatic machine 1 according to the present invention. When compared to the first exemplary embodiment of FIG. 1, the second exemplary embodiment lacks the sausage feeders 1000, but still has the optional sausage loading units 40 and the aligning units 60. In contrast to the first exemplary embodiment shown in FIG. 1, the second exemplary embodiment shown in FIG. 2 has been depicted without the protective cover 47 of the sausage loading units 40 and without the protective cover 32 of the second and third conveyor belts 20, 30, so that the components thereof can be seen in greater detail.

This second exemplary embodiment will be described following the flow of the sausages 100 along the different stations or elements of the automatic machine 1 for forming and transferring batches of sausages.

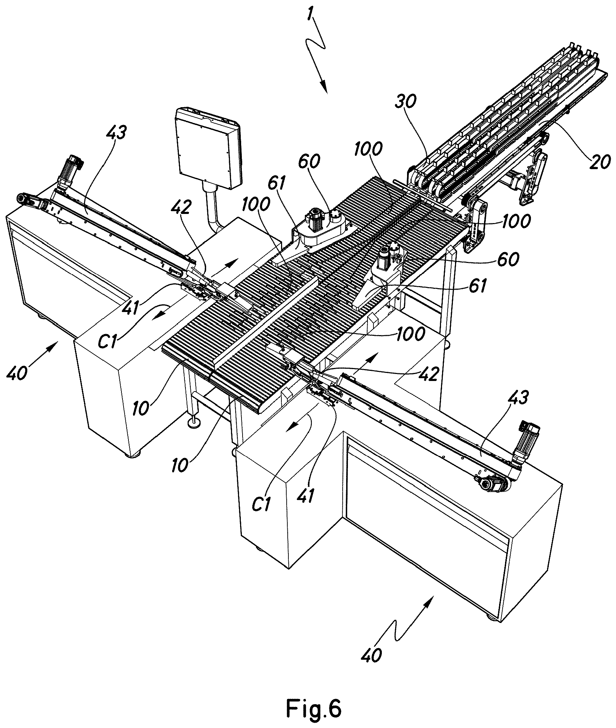

The sausage loading unit 40 comprises a carriage 41 two-way movable along a side of the first conveyor belt 10 (see for greater detail, FIG. 6), a sausage discharge unit 42 for placing sausages 100 on the first conveyor belt 10 and a sausage feeding conveyor belt 43 for feeding sausages 100 to the sausage discharge unit 42. In particular, said sausage discharge unit 42 is configured to place sausages 100 on the first conveyor belt in a parallel arrangement, adjacent to each other. Among other benefits, this eases the subsequent manipulation of the plurality of sausages 100 and increases the density of sausages 100 on the first conveyor belt 10, thus increasing the productivity of the automatic machine 1 object of the present invention.

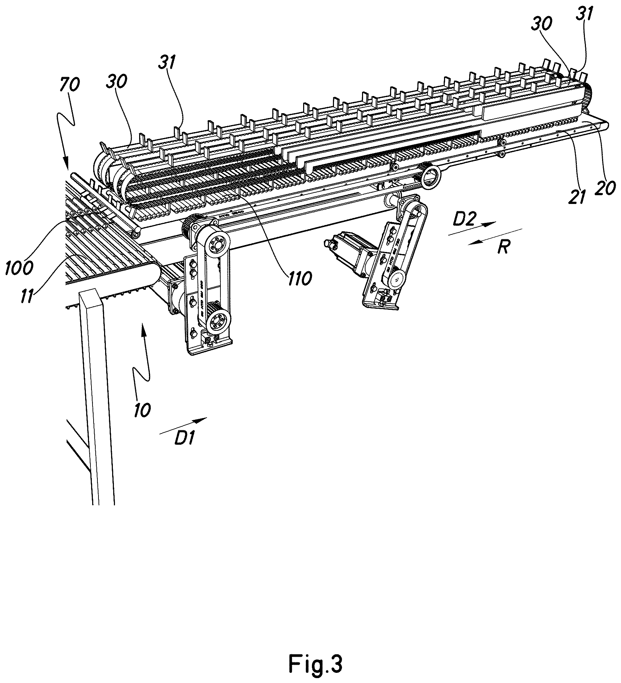

The first conveyor belt 10 of this second exemplary embodiment comprises a plurality of individual compartments 11 adjacent to each other (see, for example, FIGS. 3 to 5). Said individual compartments are preferably perpendicular to the first advance direction D1. Other embodiments of an automatic machine according to the present invention can comprise a smooth or flat first conveyor belt 10, that is to say, a first conveyor belt 10 without said individual compartments 11. Having individual compartments 11 is advantageous, at least, because it restricts the movement of the sausages 100 in the longitudinal direction of the first conveyor belt 10.

The first conveyor belt 10 advances in the first advance direction D1 thereby moving the sausages 100 laying thereon also in the first advance direction. In this second exemplary embodiment, the automatic machine 1 further comprises, for each production line, an aligning unit 60 configured to align the sausages 100 on the first conveyor belt 10 so that the distal ends of the sausages 100 are aligned. The aligning unit 60 maintains the sausages 100 on the first conveyor belt 10 in a parallel arrangement adjacent to each other, as they were placed on the first conveyor belt 10 by the sausage discharge unit 42.

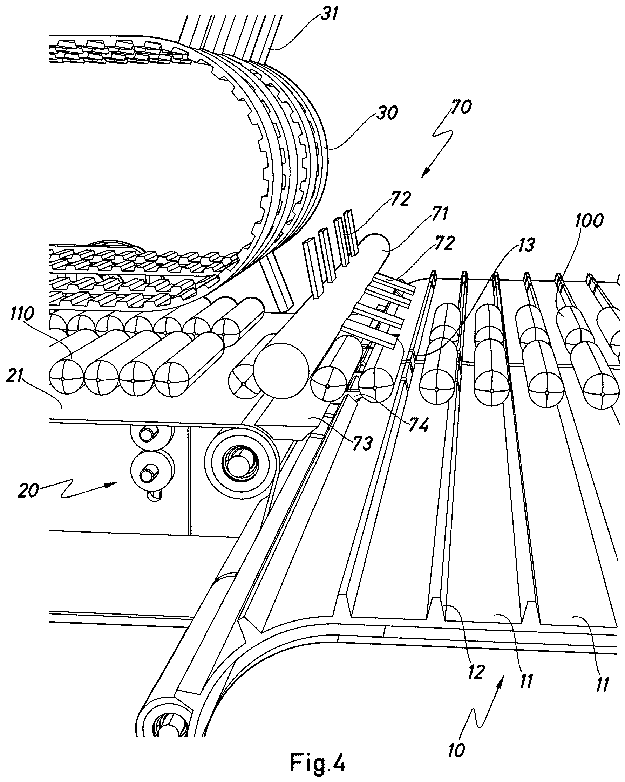

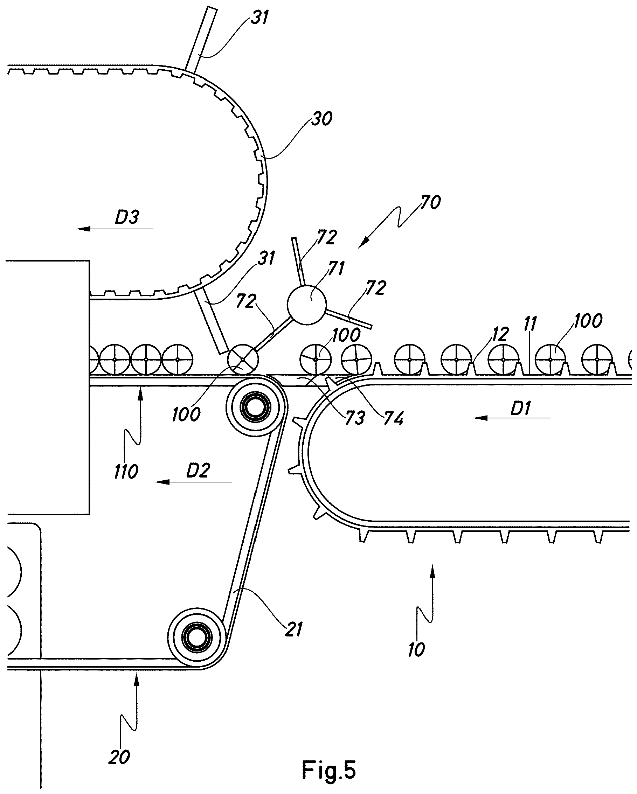

Once the sausages 100 on the first conveyor belt 10 reach an unloading end thereof, the sausages 100 are transferred to the second conveyor belt 20 which is configured to receive the plurality of sausages 100 from the first conveyor belt 10 and to advance the plurality of sausages 100 in a second advance direction D2 and at a second advance speed. As the plurality of sausages 100 are transferred to the second conveyor belt 20, said plurality of sausages 100 are separated into batches 110 of sausages 100 by the paddles 31 of the third conveyor belt 30 (see FIGS. 4 and 5). Said batches 110 of sausages 100 advance along the second conveyor belt 20 together with the third conveyor belt 30, and, in particular, together with the paddles 31 of the conveyor belt that delimits the corresponding batch 110. By advancing synchronously, the batches 110 of sausages 100 are protected as otherwise the batches 110 would rub against the paddles 31 and drag them, thereby damaging, or at least risking to damage, the sausages 100.

Once the batches 110 of sausages 100 reach a discharging position, the second conveyor belt 20, which is a retractable conveyor belt, retracts towards a retracting direction R that is opposite to the second advance direction, so that batches 110 of sausages 100 on the second conveyor belt 20 fall into an inferior level, wherein they are preferably collected.

Like the first exemplary embodiment of FIG. 2, this second exemplary embodiment comprises two production lines and each production line has its own independent elements, with the exception of the second conveyor belt 20 which is shared for both production lines. The automatic machine 1 of this second exemplary embodiment comprises two third conveyor belts 30 for each product line, which means that in total, the exemplary embodiment shown comprises four third conveyor belts 30 that work in cooperation as two pairs of conveyor belts 30, one for each product line.

The operation of the second and third conveyor belt 20, 30 can be seen in greater detail in FIG. 3, which shows a detail perspective view of the second and third conveyor belts 20, 30 of the second exemplary embodiment of an automatic machine 1 shown in FIG. 2, which also shows the unloading end of the first conveyor belt 10, as well as an optional transfer unit 70 of this second exemplary embodiment. Said transfer unit 70 is configured to aid in the transfer of sausages 100 from the second conveyor belt 20 to the third conveyor belt 30 and is described in more detail in the context of FIGS. 4 and 5.

In FIG. 3 the second conveyor belt 20 is in a fully extended position, that is to say, not retracted, and comprises a plurality of batches 110 of sausages 100 distributed along its entire length.

The third conveyor belt 30 comprises means for locking its position, so that the paddles 31 act as a stop of the corresponding batch 110 of sausages 100. The position of the third conveyor belt 30 can be locked either by its driving motors or by a lock, either mechanical or magnetic.

FIG. 4 and 5 show a perspective and a side view, respectively, of the transfer unit 70 of the second exemplary embodiment of an automatic machine 1 shown in FIGS. 2 and 3. Said transfer unit 70 is configured to transfer the sausages 100 from the first conveyor belt 10 to the second conveyor belt 20 and comprises a transfer element 73 arranged substantially contiguous to the first and to the second conveyor belt 10, 20 and a rotating shaft 71 comprising a plurality of spaced apart paddles 72 that aid in transferring the sausages 100 from the first conveyor belt 10 to the second conveyor belt 20. Said paddles 72 are preferably uniformly distributed around the circumference of the rotating shaft 71, as in the case of the second exemplary embodiment of an automatic machine 1. In this exemplary embodiment, the rotating shaft 71 comprises three groups of spaced apart paddles 72, each group being uniformly distributed around the circumference of said rotating shaft 71.

In order to ensure a smoother transition between the first conveyor belt 10 and the second conveyor belt 20 the transfer element 73 of the transfer unit 70 shown comprises extensions 74 that extend towards the first conveyor belt 10. In order to avoid mechanical interference, i.e. collision, between the extensions 74 and the walls 12 defining the individual compartments 11, said walls comprise cutouts 13 aligned with said extensions 74, so that the extensions 74 can pass through the cutouts 13 and be closer to the first conveyor belt 10.

In embodiments wherein the first conveyor belt 10 lacks individual compartments 11, and in particular, lacks walls 12 that define individual compartments 11, said extensions may not be necessary as the transfer element can be placed closer to the surface of the first conveyor belt 10 carrying the sausages 100. However, said extensions 74 can also be used in this kind of embodiments.

Besides aiding in transferring the sausages 100 from the first conveyor belt 10 to the second conveyor belt 200, the transfer unit 70 acting in cooperation with the paddles 31 of the third conveyor belt 30 also aid in creating the batches 110 of sausages 100 on the second conveyor belt 20. The paddles 31 of the third conveyor belt 30, or in this exemplary embodiment, the paddles 31 of the third conveyor belts 30, are spaced apart a distance such that a batch 110 of a certain number of sausages 100 is created between consecutive paddles 31. The number of sausages 100 in a batch 110 depends on the distance between paddles. Therefore, the third conveyor belt 30, together with its paddles 31, is preferably replaceable so that batches 110 with a different number of sausages 100 can be created by simply replacing the third conveyor belt 30 with another one wherein the distance between paddles 31 is different. Alternatively, it is also envisaged a third conveyor belt 30 having removable paddles 31 so that they can be removed from the third conveyor belt 30 at reattached to it separated by a different distance, so that the number of sausages 100 in a batch 110 differs from the previous configuration.

From the point of view shown in FIGS. 4 and 5, the rotating shaft 71, and the paddles 72 that move together with it, rotate in a clockwise direction.

The transfer unit 70 shown is an optional element and may not be present in other embodiments of the present invention. It can also be present with a configuration different than the one shown in FIGS. 4 and 5, for example, with a different number of paddles 72.

FIG. 6 depicts a perspective view of the second exemplary embodiment of an automatic machine 1 previously shown in FIGS. 2 to 5. Besides other elements previously described, FIG. 6 shows the advance direction C1 of the carriage 41 of each sausage loading unit 1 of the automatic machine 1 of the second exemplary embodiment according to the present invention.

As depicted by arrows C1, the carriage 41 moves two-ways along the first conveyor belt 10. Said movement is preferably rectilinear and parallel to the first conveyor belt 10, as in this second exemplary embodiment, although in other embodiments said movement could also be slightly curvilinear or rectilinear but slightly convergent / divergent, as long as the distance of the carriage 41 to the first conveyor belt 10, and in particular, the distance from the sausage discharge unit 42 supported by the carriage 41 to the first conveyor belt 10 allows correct operation of the sausage discharge unit 42, that is to say, allows correct placement of the sausages 100 on the first conveyor belt 10.

By two-way moving the carriage 41 along the first conveyor belt 10, the discharge unit 42 synchronizes its position with the one of the individual compartment 11 that is going to be loaded with the corresponding sausage 100. As sausages 100 are not received from the sausage feeding conveyor belt 43 at a constant rate, the carriage 41 moves so that the sausage 100 to be loaded on the first conveyor belt 10 is loaded in the adjacent compartment 11 to the one previously loaded. If the interval between subsequent sausages 100 is too long, the carriage, and thus, the discharge unit 42 will move towards the distal or unloading end of the first conveyor belt 10 to reach the first empty individual compartment 11 and follow said individual compartment 11, at the first advance speed of the first conveyor belt 10, until the sausage 100 is loaded onto the corresponding individual compartment. If the interval between subsequent sausages 100 is too short, the carriage 41 together with the discharge unit 42 will move towards the proximal or loading end of the first conveyor belt 10 to reach the first empty individual compartment 11, so that a sausage can be delivered thereon.

The aforementioned description of the operation of the sausage loading unit 40 has been made in the context of an automatic machine 1 comprising a first conveyor belt 10 having a plurality of individual compartments 11. However, it should be noted that the operation is equivalent in other embodiments wherein the first conveyor belt 10 is smooth, that is to say, in other embodiment wherein the first conveyor belt 10 does not comprise individual compartments 11. In this latter case, the carriage 41 and the discharge unit 42 move to the position adjacent to the previously dispensed sausage 100, so that the sausages are loaded on the first conveyor belt 10 in a parallel arrangement, adjacent to each other.

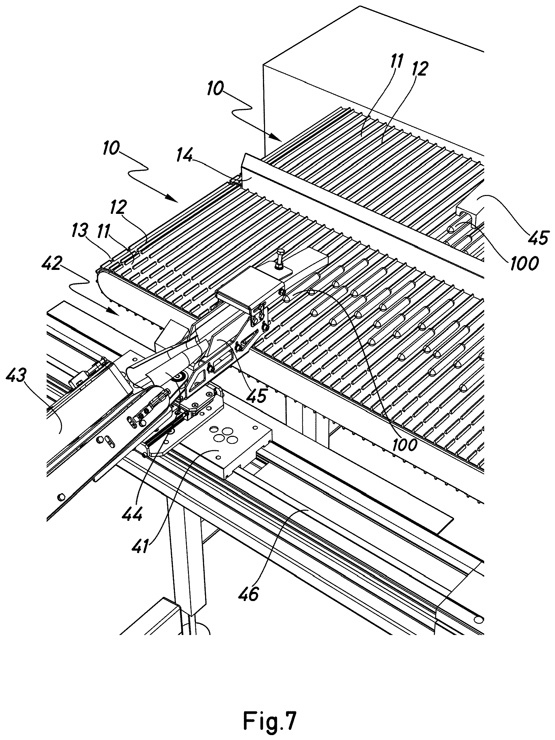

FIG. 7 shows a perspective view of a detail of the sausage loading unit 40 of the second exemplary embodiment of an automatic machine shown in FIGS. 2 to 6. In FIG. 7 the casing of the sausage loading unit 40 has been removed so that the guide 46, along which the carriage 41 moves, can be seen. As previously stated, in this second exemplary embodiment the guide 46 is rectilinear and arranged parallel to the first conveyor belt 10, although in other embodiments said guide 46 can be different.

The sausage discharge unit 42 is attached to the carriage 41 that slides along the guide 46, and comprises, in this exemplary embodiment, a discharge ramp 44 and a sausage guide 45. Said discharge ramp 44 is configured to receive sausages 100 from the sausage feeding conveyor belt 43 and to transfer them to the sausage guide 45 that guides the sausage 100 to the corresponding location on the first conveyor belt 10. The discharge ramp 44 of the exemplary embodiment shown is shaped so as to prevent sausages 100 from falling off, with its sides curved inwards.

In the exemplary embodiment shown, the sausage feeding conveyor belt 43 is V-shaped. This aids in preventing the sausage from falling of the sausage feeding conveyor belt 43 and provides a better and softer handling of the sausage 100.

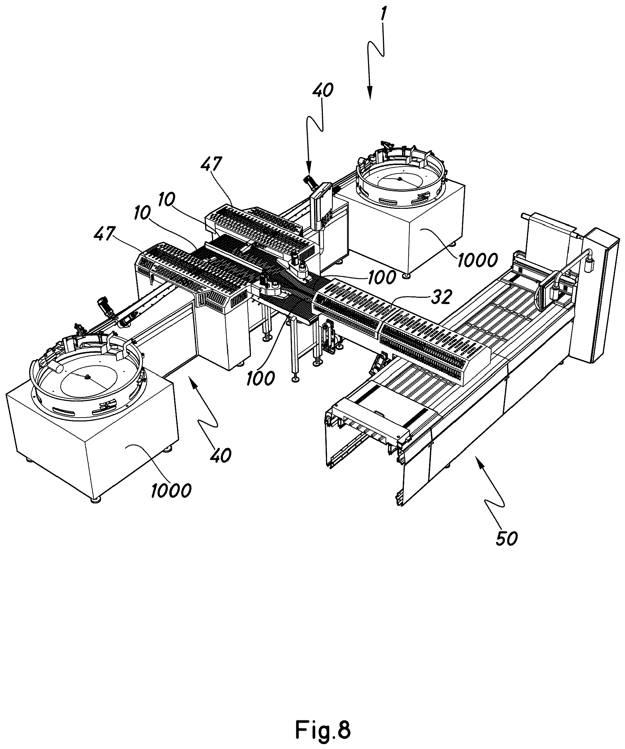

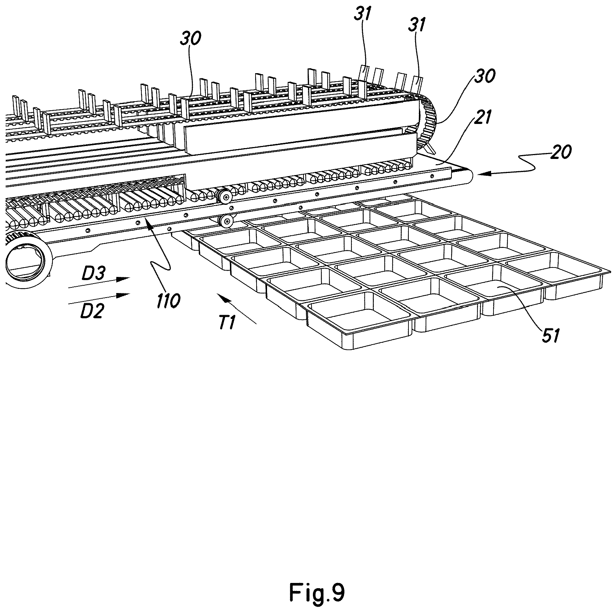

FIG. 8 shows a perspective view of a third exemplary embodiment of an automatic machine 1 according to the present invention. This third exemplary embodiment is substantially similar to the first exemplary embodiment shown in FIG. 1, but with the addition of an automatic packaging unit 50 configured to pack the batches 110 of sausages 100 coming from the second conveyor belt. In this third exemplary embodiment, the packaging unit 50 is a thermoforming machine that package the batches 110 of sausages 100 in trays 51 (see FIGS. 9 to 11). However, in other embodiments having a packaging unit 50, said packaging unit may package the batches 110 of sausages 100 in packages other than trays and may be any other suitable packing machine other than a thermoforming packaging machine.

FIGS. 9 to 11 show a perspective view of the second conveyor belt 20 and the third conveyor belt 30 of the third exemplary embodiment during the process of unloading batches 110 of sausages 110 to an inferior level, wherein there are located the trays 51 of the packaging unit 50, which has not been depicted in FIGS. 9 to 11 for clarity purposes.

In FIG. 9 the second conveyor belt 20 is depicted with batches 110 of sausages 100 along its entire length. In this moment, the batches 110 of sausages 100 are ready to be dropped to an inferior level, in this case, to the trays 51 in the packaging unit 50. As the second conveyor belt 20 cannot accommodate more batches 110, the first conveyor belt 10 stops its operation.

If the automatic machine 1, as in this exemplary embodiment, comprises a sausage loading unit 40, the operation of the sausage loading unit 40 is also interrupted. When the operation of the sausage loading unit 40 is interrupted, the carriage 41 returns to its initial or resting position, as, depending on the interval between sausages coming from the sausage feeding conveyor belt 43 and on the advance speed of the first conveyor belt 10, the carriage may be closer to the unloading or to the loading end of said first conveyor belt 10.

Before beginning the unloading of the batches 110 of sausages 100, the third conveyor belt 30 locks its position, so that the paddles 31 can act as a stop of the sausages 100 of the batches 110.

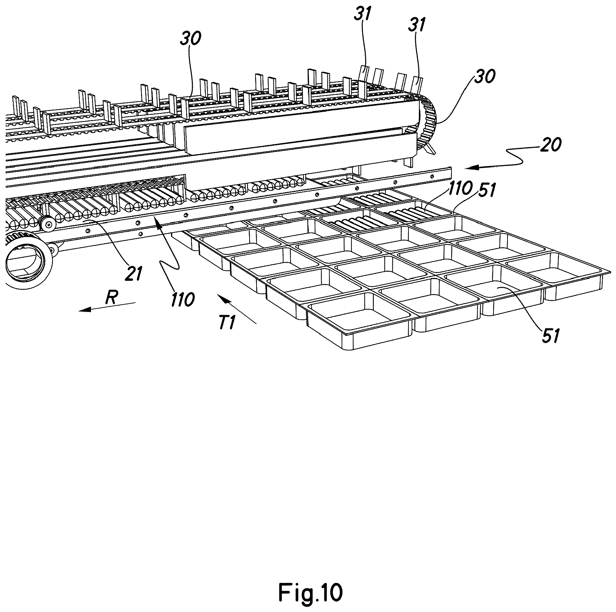

In FIG. 10 the second conveyor belt 20, which is a retractable conveyor belt, is depicted in a partially retracted position, that is to say, with its belt 21 moving following a retracting direction R which is opposite to the second advance direction D2. As the belt 21 retracts, the paddles 31 of the third conveyor belt 30 act as a stop of the batches 110 of sausages 100, which fall into an inferior level wherein the trays 51 are located. The packaging unit 50 places the trays 51 aligned in rows so that each tray is placed directly underneath the corresponding batch 110 of sausages 100, so that when the sausages 100 fall once the belt 21 has been retracted past its location, the sausages 100 fall into the corresponding tray 51.

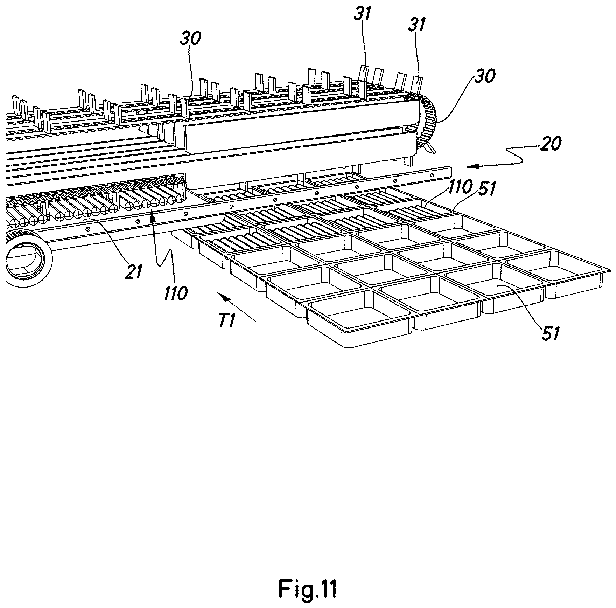

FIG. 11 shows the second conveyor belt 20 in its fully retracted position and with the row of trays 51 placed underneath the second conveyor belt 20 loaded with the corresponding batches 110 of sausages 100. Once the trays 51 are loaded with the corresponding sausages 100, the packaging unit 50 moves the rows of trays 51 in an advance direction T1 so that the subsequent row of trays 51 is placed underneath the second conveyor belt 20 and the loaded trays 51 proceed with its packaging. Once the row of trays 51 is loaded with the sausages 100, the automatic machine is ready to resume its operation. In order to do so, the first conveyor belt 10 and the sausage loading unit 40 resume its operation thereby providing sausages 100 to the second conveyor belt 20 that advances to its extended position while batches 110 of sausages are being created on it by the paddles 31 of the third conveyor belt 30.

In FIGS. 9 to 11 the operation of the automatic machine 1 and, in particular, of the second and third conveyor belts 20, 30 has been described in cooperation with a packaging unit 50. However, it should be understood that the operation would be equivalent in embodiments lacking a packaging unit, wherein the batches 110 of sausages 100 fall into an inferior level, wherein they are preferably collected. Said inferior level may be a further conveyor belt, a support surface, a cooking appliance, etc.

It should be understood that the first, second and third conveyor belts 10, 20, 30 are driven by corresponding properly controlled motors, even though the motors of the first and third conveyor belts 10, 30 are not depicted in the drawings.

Unless otherwise provided, features described in relation to a certain exemplary embodiment are also applicable to other embodiments of the present invention.

## Claims

1. Automatic machine (1) for forming and transferring batches of sausages, the machine comprising:
- a first conveyor belt (10) for advancing a plurality of sausages (100) in parallel arrangement, adjacent to each other, in a first advance direction (D1) at a first advance speed;
- a second conveyor belt (20) arranged substantially contiguous to the first conveyor belt (10) and being configured to receive the plurality of sausages (100) from the first conveyor belt (100) and to advance the plurality of sausages (100) in a second advance direction (D2) and at a second advance speed;
- a third conveyor belt (30) arranged above the second conveyor belt (20) and advancing in a third advance direction (D3) at a third advance speed, said third advance direction (D3) being parallel to the second advance direction (D3), said third conveyor belt (30) comprising a plurality of spaced apart paddles (31) configured for creating batches (110) of sausages (100) from the plurality of sausages (100) arranged on the second conveyor belt (20);
**characterised in that** the second conveyor belt (20) is a retractable conveyor belt and is configured to retract towards a retracting direction (R) being opposite to the second advance direction (D2);
and **in that** the spaced apart paddles (31) of the third conveyor belt (30) are configured to act as a stop of the batches (110) of sausages (100) in the retracting direction (R) while the second conveyor belt (20) retracts, so that the batches (110) of sausages (100) fall into an inferior level.

2. Automatic machine (1), according to claim 1, further comprising a sausage loading unit (40), which comprises:
- a carriage (41) movable along the first conveyor belt (10);
- a sausage discharge unit (42) for placing sausages (100) on the first conveyor belt (10);
- a sausage feeding conveyor belt (43) for feeding sausages (100) to the sausage discharge unit (42);
wherein the carriage (41) is configured to synchronize with the advance speed of the first conveyor belt (10) so that the sausages (100) are placed on the first conveyor belt (10) in a substantially contiguous manner in parallel arrangement, adjacent to each other.

3. Automatic machine (1), according to claim 2, wherein the first conveyor belt (10) comprises a plurality of contiguous individual compartments (11), each individual compartment (11) being configured to receive a corresponding sausage (100); and wherein the sausage loading unit (40) is configured to move the carriage (41) along the first conveyor belt (10) so that consecutive sausages are placed in contiguous individual compartments (11).

4. Automatic machine (1), according to any of the preceding claims, further comprising an automatic packaging unit (50) arranged for collecting and packaging the batches (110) of sausages (100) at the inferior level.

5. Automatic machine (1), according to claim 4, wherein the packaging unit (50) is configured to place a plurality of trays (51) in an aligned configuration underneath the second conveyor belt (20); said second conveyor belt (20) and said third conveyor belt (30) being configured so that a corresponding plurality of batches (110) of sausages (100) is arranged above the corresponding tray (51) aligned with it, so that when the second conveyor belt (20) retracts each batch (110) of sausages (100) falls into the corresponding tray.

6. Automatic machine (1), according to any of the preceding claims, further comprising an aligning unit for aligning the plurality of sausages in parallel arrangement, on the first conveyor belt, the aligning unit comprising an oscillating inclined plane arranged in a convergent manner.

7. Automatic machine (1), according to any one of the preceding claims, further comprising a transfer unit for transferring the sausages from the first conveyor belt to the second conveyor belt.

8. Automatic machine (1), according to claim 7, wherein the transfer unit comprises a transfer element arranged substantially contiguous to the first and to the second conveyor belt.

9. Automatic machine (1), according to claim 8, wherein the transfer unit further comprises a rotating shaft comprising a plurality of spaced apart paddles, said rotating shaft arranged substantially perpendicular to the first and second conveyor belt.

10. Method for forming and transferring batches of sausages comprising the steps of:
- providing an automatic machine (1) for forming and transferring batches of sausages according to any one of claims 1 to 9;
- placing a plurality of sausages (100) in parallel arrangement, adjacent to each other on a first conveyor belt (10);
- advancing the plurality of sausages (100) in a first advance direction (D1) at a first advance speed with the first conveyor belt;
- receiving in a second conveyor belt (20) the sausages (100) of the first conveyor belt (10) keeping their parallel arrangement;
- advancing the plurality of sausages (100) on the second conveyor belt (20) in a second advance direction (D2) at a second advance speed;
- creating batches (110) of sausages (100) from the plurality of sausages (100) on the second conveyor belt (20) with spaced apart paddles (31) of a third conveyor belt (30) arranged above the second conveyor belt (20) advancing in a third advance direction (D3) at a third advance speed;
- retracting the second conveyor belt (20) towards a retracting direction (R), said retracting direction (R) being opposite to the second advance direction (D2); and
- letting the batches (110) of sausages (100) fall into an inferior level.

11. Method, according to claim 10, further comprising the steps of:
- stopping the advance movement of the first, second and third conveyors belts (10, 20, 30) before the second conveyor belt (20) is retracted;
- returning the retracted second conveyor belt (20) to its extended position; and
- resuming the advance movement of the first, second and third conveyor belts (10, 20, 30).

12. Method, according to claim 10 or 11, wherein the step of placing a plurality of sausages (100) on a first conveyor belt (10) comprises the steps of:
- providing a sausage (100) to a sausage feeding conveyor belt (43);
- driving the sausage (100) to a sausage discharge unit (42) by the sausage feeding conveyor belt (43);
- synchronizing the advance speed of a carriage (41) supporting the discharge unit (42) with the first advance speed of the first conveyor belt (10); and
- discharging the sausage (100) in a substantially contiguous manner to a preceding sausage.

13. Method, according to claim 12, wherein the first conveyor belt (10) comprises a plurality of contiguous individual compartments (11), and wherein the step of placing a plurality of sausages (100) on the first conveyor belt (10) comprises the steps of:
- synchronizing the carriage (41) of the sausage loading unit (40) with the advance movement of the individual compartment (11) on which a sausage is to be placed; and
- placing the sausage (100) in the corresponding individual compartment (11) so that consecutive sausages (100) are in contiguous individual compartments (11).

14. Method, according to any one of claims 10 to 13, further comprising the steps of:
- providing, by an automatic packaging unit (50), a plurality of trays (51) in an aligned configuration underneath the second conveyor belt (20);
- arranging each batch (110) of sausages (100) above the corresponding tray (51); and
- letting each batch (110) of sausages (100) fall into the corresponding tray (51).

15. Method, according to any one of claims 10 to 14, further comprising the step of aligning the sausages (100) in parallel arrangement, adjacent to each other on the first conveyor belt (10), with an aligning unit (60).
